# EUROPÄISCHE PATENTANMELDUNG

(11) **EP 0 746 982 A2**
(43) Veröffentlichungstag der Anmeldung: **11.12.1996**
(21) Anmeldenummer: 96103624.1
(22) Anmeldetag: 08.03.1996
(51) Int. Cl.: A21C 9/08

(54) **Vorrichtung zur Aufnahme von Behältern**

(30) Priorität: 12.05.1995 DE 29507845 U
(71) Anmelder: Brückner, Oliver, 44579 Castrop-Rauxel (DE)
(72) Erfinder: Brückner, Oliver, 44579 Castrop-Rauxel (DE)
(74) Vertreter: Patentanwälte Meinke, Dabringhaus und Partner

(57) **Zusammenfassung**

Mit einer Vorrichtung zur Aufnahme von Behältern in einem mit Aufnahmen ausgerüsteten Traggestell mit einem in die Aufnahmen einsetzbaren Halterahmen, der zur Aufnahme der Behälter ausgebildet ist, soll eine Lösung geschaffen werden, mit der Behälter aus Edelstahl und dergl., insbesondere Gastronormbehälter, einfach, sicher und kostengünstig in einem mit schienenförmigen Aufnahmen aufgerüsteten Aufnahmeraum aufgenommen werden können.

Dies wird dadurch erreicht, daß zum Einhängen und/oder Einschieben von Behältern aus Edelstahl oder dergl., insbesondere Gastronormbehältern (3), in die Aufnahmen (6) eines vorzugsweise allseitig schließbaren, von wenigstens einer Seite befüllbaren Aufnahmeraumes, wie eines Backofens, Kühlschrankes oder dergl., der Halterahmen (1) nach vorne offen ausgebildet und mit wenigstens einem zusätzlichen Quer- und/oder Längssteg (2,10) versehen ist.

## Beschreibung

Die Erfindung betrifft eine Vorrichtung zur Aufnahme von Behältern in einem mit Aufnahmen ausgerüsteten Traggestell mit einem in die Aufnahmen einsetzbaren Halterahmen, der zur Aufnahme der Behälter ausgebildet ist.

Eine solche Vorrichtung ist aus GB 633,323 bekannt. In dieser Druckschrift ist ein als Rahmengestell mit schienenförmigen Aufnahmen ausgebildeter Transportwagen beschrieben, der in große begehbare Backöfen hinein- und aus diesen herausgefahren werden kann. In diesen Transportwagen können vor dem Einfahren in den Backofen gattungsgemäße als Halterahmen ausgebildete Vorrichtungen eingeschoben werden, wobei der Halterahmen mit einer Mehrzahl von Aufnahmeöffnungen fester Größe versehen ist, in welche Brotformen eingehängt werden können. Diese bekannte Vorrichtung ist somit nur zur Aufnahme einheitlicher Behälter geeignet und eine Bestückung und/oder Entnahme einzelner Behälter ist nur dann möglich, wenn sich der Transportwagen mit den Halterahmen außerhalb des Backofens befindet und der jeweilige Halterahmen aus dem Transportwagen herausgezogen wird, um den Behälter entnehmen zu können.

In der Gastronomie, in Kantinen, Restaurants, Schnellimbißbetrieben und dergl. werden vielfach Gastronormbehälter verwendet, die normiert sind. Sie weisen unterschiedliche Größen auf, wobei unterschieden wird zwischen den Größen 1/1, 1/2, 2/4, 1/4, 2/8, 1/3, 1/6 sowie 2/3 usw. An ihrer Oberkante weisen diese Gastronormbehälter einen umlaufenden, um 90° abgewinkelten Randbereich auf.

In derartigen Behältern werden fertige Speisen zubereitet oder erhitzt, teilweise auch überbacken, indem die entsprechenden Behälter auf gebräuchliche Gitterroste oder Backbleche gestellt und auf diese Art und Weise in den Backofen geschoben werden.

Das hat einerseits den Nachteil, daß derartige Bleche bzw. Roste sehr teuer sind, und die Behälter zudem keinen festen Halt finden, so daß sie hin- und herrutschen. Hierbei besteht andererseits die Gefahr, daß Nahrungsmittel verschüttet werden, der Backofen, die Bleche bzw. Roste und die Behälter verschmutzt werden, und daß der Benutzer sich verletzt.

Aufgabe der Erfindung ist es daher, eine Lösung zu schaffen, mit der Behälter aus Edelstahl und dergl., insbesondere Gastronormbehälter, einfach, sicher und kostengünstig in einem mit schienenförmigen Aufnahmen aufgerüsteten Aufnahmeraum aufgenommen werden können.

Diese Aufgabe wird bei einer Vorrichtung der eingangs bezeichneten Art erfindungsgemäß dadurch gelöst, daß zum Einhängen und/oder Einschieben von Behältern aus Edelstahl oder dergl., insbesondere Gastronormbehältern, in die Aufnahmen eines vorzugsweise allseitig schließbaren, von wenigstens einer Seite befüllbaren Aufnahmeraumes, wie eines Backofens, Kühlschrankes oder dergl. der Halterahmen nach vorne offen ausgebildet und mit wenigstens einem zusätzlichen Quer- und/oder Längssteg versehen ist.

In einen derartigen Halterahmen können verschieden große Gastronormbehälter, die umlaufend einen abgewinkelten Rand an ihrer Oberkante aufweisen, eingehängt bzw. eingeschoben werden. Sie finden dabei in dem Halterahmen sicheren Halt und rutschen nicht hin und her, so wie dies bei auf Backbleche bzw. -roste gestellten Behältern der Fall ist. Zudem ist diese Lösung äußerst platzsparend, da direkt über eine Lage von in einem Halterahmen eingeschobenen bzw. eingehängten Gastronormbehältern die nächste Lage in die entsprechenden Aufnahmen des Backofens, Kühlschrankes, Transportbehälters, oder dergl. eingesetzt werden kann und jede Lage parallel zu den anderen Lagen aus dem Backofen oder dergl. heraus und in diesen hineingeschoben werden kann. Da der Halterahmen nicht allseitig geschlossen ist, sondern an seiner vorderen, zur Backofenöffnung hin weisenden Seite U-förmig geöffnet ist, können ein oder mehrere längliche Gastronormbehälter in den Halterahmen eingeschoben bzw. separat aus diesem herausgezogen werden, ohne den Halterahmen selbst aus dem Backofen oder dergl. herausziehen zu müssen, was den wesentlichen Vorteil bietet, daß die anderen, im Halterahmen befindlichen Behälter im Backofen, Kühlschrank oder dergl. verbleiben können. Außerdem kann der Halterahmen auch im Küchenbereich an einer Wandfläche oder dergl. befestigt werden, um bei der Speisenzubereitung Gastronormbehälter entsprechend zwischenlagern zu können.

Vorteilhaft ist vorgesehen, daß der wenigstens eine zusätzliche Quer- und/oder Längssteg lösbar am Halterahmen befestigt ist. Durch diese variable Ausrüstung des Halterahmens mit wenigstens einem lösbaren zusätzlichen Quer- und/oder Längssteg ist es auf einfachste Weise möglich, unterschiedlich große Gastronormbehälter in den Halterahmen einzusetzen bzw. einzuschieben. Wird ein Längssteg verwandt, können z.B. drei 1/3 Behälter oder vier 1/4 Behälter eingesetzt werden. Bei Einsatz eines zusätzlichen Querstegs können z.B. sechs 1/6 Behälter oder zwei 2/4 Behälter untergebracht werden. Dadurch, daß die zusätzlichen Stege lösbar mit dem Halterahmen verbunden sind, kann die Inneneinteilung des Halterahmens den Wechselbedürfnissen angepaßt werden, so daß nur ein Halterahmen für verschiedene Gastronormbehälter erforderlich ist und dieser variabel verwendbar ist. Die zusätzlichen Stege können z.B. angeschraubt oder angesteckt werden, alternativ ist auch vorgesehen, daß sie nicht lösbar befestigt, sondern angeschweißt sind.

Es kann dann auch vorgesehen sein, daß der Halterahmen allseitig geschlossen ausgebildet ist, indem ein entsprechender Zusatzsteg verwandt wird. Hiermit wird erreicht, daß der Halterahmen sowohl in seinen beiden seitlichen Bereichen, wie auch im vorderen und rückwärtigen Bereich eine Auflagefläche für die entsprechend abgewinkelten Randbereiche der Gastronormbehälter bietet, so daß diese von mehreren Seiten sicher auf dem Halterahmen aufliegen.

Weiter ist vorgesehen, daß der Halterahmen aus einem einzigen, entsprechend gebogenen Draht besteht. Ein solcher Halterahmen kann besonders kostengünstig mit geringstem Materialeinsatz hergestellt werden.

Die Erfindung ist nachstehend anhand der Zeichnung beispielsweise näher erläutert. Diese zeigt in:
- Fig. 1: in perspektivischer Darstellung eine erfindungsgemäße Vorrichtung in einer ersten Ausführungsform mit vier verschiedenen Gastronormbehältern,
- Fig. 2: ebenfalls in perspektivischer Darstellung einen geöffneten Backofen, in den eine Vorrichtung nach Fig. 1 eingesetzt ist,
- Fig. 3: eine Draufsicht auf eine abgewandelte Ausführungsform einer erfindungsgemäßen Vorrichtung,
- Fig. 4: ein vergrößertes Detail der Fig. 3 und
- Fig. 5: eine Draufsicht auf ein weiteres Ausführungsbeispiel einer erfindungsgemäßen Vorrichtung.

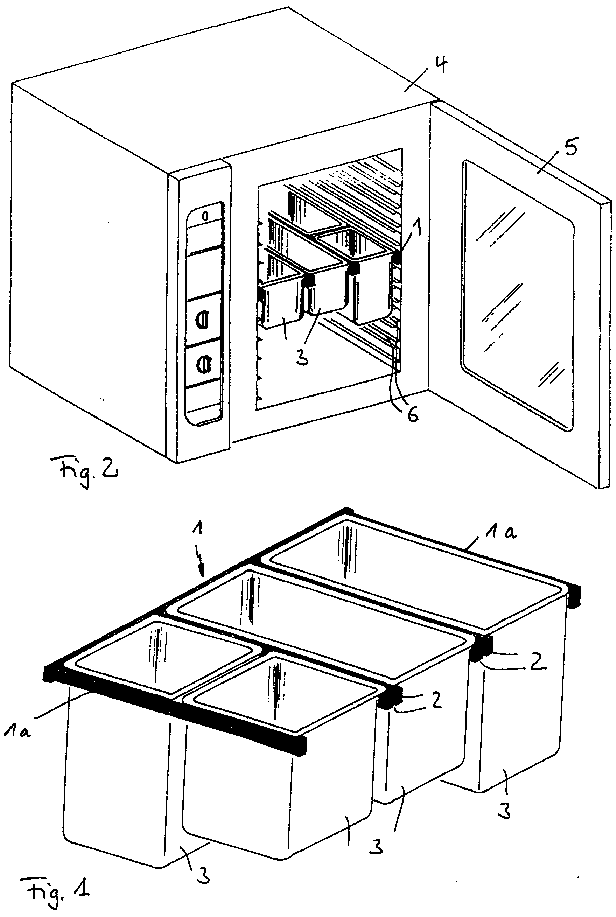

Eine erfindungsgemäße Vorrichtung zur Aufnahme von Behältern, insbesondere von Gastronormbehältern, weist zunächst einen U-förmigen Halterahmen auf, der allgemein mit 1 bezeichnet ist. Dieser U-förmige Halterahmen ist aufgrund seiner U-Form nach vorne hin offen, wie dies aus Fig. 1 hervorgeht und weist beim Ausführungsbeispiel nach Fig. 1 im Bereich zwischen den U-Schenkeln 1a zwei bzw. vier zusätzliche Längsstege 2 auf, deren Länge mit der Länge der U-Stege 1a in etwa übereinstimmt und die endseitig wie die U-Schenkel 1a vorzugsweise an den U-Steg 1b des U-förmigen Halterahmens 1 angeschweißt sind. Dabei sind beim Ausführungsbeispiel nach Fig. 1 jeweils nebeneinander zwei Längsstege 2 vorgesehen, d.h. diese sind paarweise angeordnet, um eine entsprechend große obere Auflagefläche zu bilden. Hier könnte aber auch jeweils nur ein Längssteg 2 mit entsprechender Breite verwendet werden. Durch diese Gestaltung der Vorrichtung ist es möglich, in diese Vorrichtung von der offenen Vorderseite her eine Mehrzahl von verschieden großen Gastronormbehältern 3 einzuschieben, die mit ihrem oberen umgebogenen seitlichen Rand 3a jeweils randseitig auf den U-Stegen 1a bzw. den Längsstegen 2 aufliegen und somit gehalten sind.

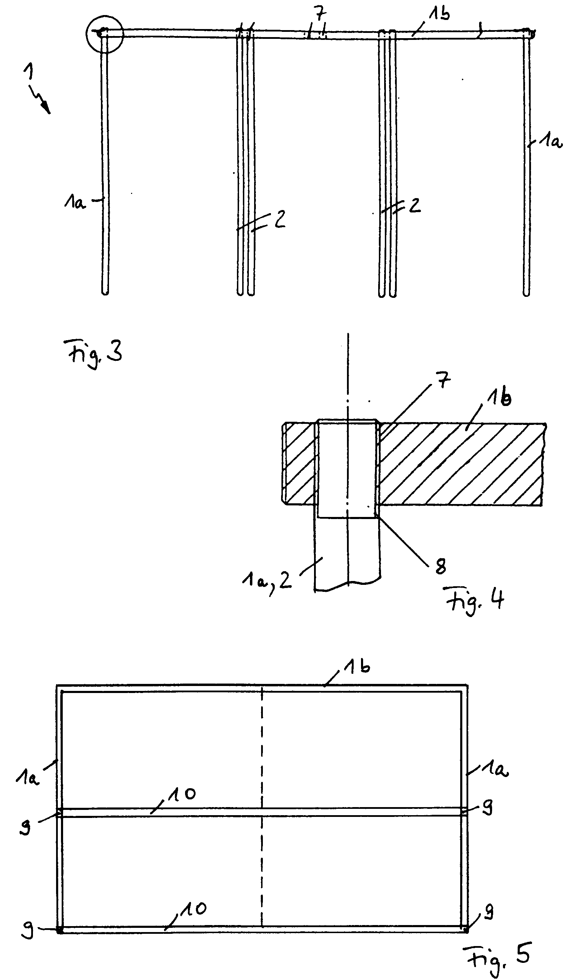

Eine so mit Gastronormbehältern 3 bestückte Vorrichtung nach Fig. 1 kann in einen allgemein mit 4 bezeichneten Backofen, der an seiner Vorderseite in üblicher Weise mit einer öffen- und schließbaren Tür 5 ausgerüstet ist, eingeschoben werden, wozu lediglich der Halterahmen in die schienenförmigen Aufnahmen 6 des Backofens 4 eingeschoben wird, wie dies Fig. 2 zeigt. Die Gastronormbehälter 3 sind somit fest und sicher im Halterahmen 1 innerhalb des Backofens gehalten und aufgrund der Ausbildung der Vorrichtung ist es möglich, einen einzelnen Gastronormbehälter zu entnehmen bzw. einzusetzen, ohne die anderen Gastronormbehälter entnehmen zu müssen.

Je nach verschiedener Gar- bzw. Backzeit der verschiedenen, in den Gastronormbehältern 3 befindlichen Speisen ist es somit möglich, diese individuell für eine jeweils vorbestimmte Zeit im Backofen zu belassen, ohne daß zur Be- bzw. Entnahme ein anderer Gastronormbehälter mit einer anderen Speisenzubereitung entnommen werden muß, wenn ein spezieller Gastronormbehälter ausgetauscht bzw. neu eingesetzt wird.

Erkennbar eignet sich die Vorrichtung nicht nur zur Verwendung in einem in Fig. 2 dargestellten Backofen 4, sie ist gleichermaßen für vergleichbare Aufnahme-Einrichtungen, die mit schienenförmigen Aufnahmen ausgerüstet sind, geeignet, beispielsweise Kühlschränke bzw. Kühlfächer, Transportbehältnisse, die vorzugsweise wärmeisoliert sind, und dergl. mehr. Natürlich ist es auch möglich, den Halterahmen 1 an einer Wand zu befestigen, um Gastronormbehälter bei der Speisenzubereitung leicht in einem Halterahmen 1 aufhängen zu können bzw. diese zwischenzulagern.

In Fig. 3 und 4 ist eine alternative Ausführungsform einer erfindungsgemäßen Vorrichtung 1 dargestellt, bei welcher im Unterschied zur Ausführungsform nach Fig. 1 die U-Schenkel 1a sowie die Längsstege 2 nicht fest am U-Steg 1b des Halterahmens 1 befestigt sind, sondern lösbar. Dazu weist der U-Steg 1b des Halterahmens (Fig. 4) beispielsweise mit Innengewinde versehene Bohrungen 7 auf, in welche die endseitig mit einem Außengewinde 8 versehenen U-Schenkel 1a bzw. Längsstege 2 einschraubbar sind. Erkennbar wird durch diese Lösung mit lösbaren Längsstegen 2 die Variationsmöglichkeit der erfindungsgemäßen Vorrichtung noch wesentlich vergrößert, da je nach Verwendungszweck verschieden große Aufnahmebereiche zwischen den U-Schenkeln 1a und den Längsstegen 2 geschaffen werden können, um entsprechend verschieden große Gastronormbehälter aufnehmen zu können.

Figur 5 zeigt eine weitere Ausführungsform einer erfindungsgemäßen Vorrichtung, wobei der Halterahmen 1 hier aus einem U-förmig gebogenen Draht mit U-Steg 1b und U-Schenkeln 1a besteht, wobei die U-Schenkel 1a an ihrem freien Ende und über ihrer Länge mit Steckelementen 9 oder dergl. versehen sind, die ein Aufstecken von mit einer entsprechenden Aufnahmeöffnung versehenen Querstegen 10 ermöglichen. Auf diese Weise läßt sich die Variabilität der erfindungsgemäßen Vorrichtung weiter erhöhen. So kann, wenn dies im Einzelfall gewünscht ist, auf diese Weise auch ein geschlossener Halterahmen erzielt werden und es könnten beim Ausführungsbeispiel gemäß Fig. 5 beispielsweise vier gleichgroße Gastronormbehälter aufgenommen werden, was durch die gestrichelte Linie 11 angedeutet ist.

Natürlich ist die Erfindung nicht auf die dargestellten Ausführungsbeispiele beschränkt. Weitere Ausgestaltungen sind möglich, ohne den Grundgedanken der Erfindung zu verlassen. So können die Inneneinteilungen des Halterahmens 1 durch Quer- und/oder Längsstege auch miteinander in geeigneter Weise kombiniert werden, um eine Anpassung an verschiedene Behältergrößen auf einfache Weise erreichen zu können

## Patentansprüche

1. Vorrichtung zur Aufnahme von Behältern in einem mit Aufnahmen ausgerüsteten Traggestell mit einem in die Aufnahmen einsetzbaren Halterahmen, der zur Aufnahme der Behälter ausgebildet ist,
dadurch gekennzeichnet,
daß zum Einhängen und/oder Einschieben von Behältern aus Edelstahl oder dergl., insbesondere Gastronormbehältern (3), in die Aufnahmen (6) eines vorzugsweise allseitig schließbaren, von wenigstens einer Seite befüllbaren Aufnahmeraumes, wie eines Backofens, Kühlschrankes oder dergl., der Halterahmen (1) nach vorne offen ausgebildet und mit wenigstens einem zusätzlichen Quer- und/oder Längssteg (2,10) versehen ist.

2. Vorrichtung nach Anspruch 1,
dadurch gekennzeichnet,
daß der wenigstens eine Quer- und/oder Längssteg (2,10) lösbar am Halterahmen (1) befestigt ist.

3. Vorrichtung nach Anspruch 2,
dadurch gekennzeichnet,
daß der Halterahmen (1) allseitig geschlossen ausgebildet ist.

4. Vorrichtung nach Anspruch 1, 2 oder 3,
dadurch gekennzeichnet,
daß der Halterahmen (1) aus einem einzigen, entsprechend gebogenen Draht besteht.
